Europäisches Patentamt

European Patent Office

Office européen des brevets

(19)

(11) Numéro de publication: **0 148 084**
**A2**

(12) # DEMANDE DE BREVET EUROPEEN

(21) Numéro de dépôt: **84402698.9**

(22) Date de dépôt: **21.12.84**

(51) Int. Cl.⁴: **G 06 K 19/08**
**G 07 F 7/08**

(30) Priorité: **26.12.83 FR 8320769**
**24.09.84 FR 8414593**

(43) Date de publication de la demande:
**10.07.85 Bulletin 85/28**

(84) Etats contractants désignés:
**BE CH DE FR GB IT LI NL**

(71) Demandeur: **Cini di Portocannone, Guido**
**6, rue Alfred Roll**
**F-75017 Paris(FR)**

(72) Inventeur: **Cini di Portocannone, Guido**
**6, rue Alfred Roll**
**F-75017 Paris(FR)**

(74) Mandataire: **Loyer, Bertrand et al,**
**Cabinet Pierre Loyer 18, rue de Mogador**
**F-75009 Paris(FR)**

(54) Détecteur pour le contrôle des éléments de sécurité intrégrés dans les cartes de crédit pour imprimantes de facturation.

(57) Dispositif pour la lecture des éléments de sécurité intégrés dans les cartes de crédit au moyen d'une lampe à rayons ultraviolets, caractérisé en ce que ladite lampe (1) est intégrée dans un boîtier (2) applicable sur la partie mobile des imprimantes destinées à la facturation de l'utilisateur de la carete de crédit, ainsi que les moyens d'alimentation électrique (6) et de commande (9).

EP 0 148 084 A2

<u>Détecteur pour le contrôle des éléments de sécurité intégrés dans les cartes de crédit pour imprimantes de facturation.</u>

La présente invention concerne un dispositif intégré dans le boîtier mobile des imprimantes communément appelées "fer à repasser" et utilisées dans le système de facturation à partir de cartes de paiement.

La détection des fausses cartes de crédit ne peut être effectuée actuellement qu'a postériori, c'est-à-dire après que l'escroquerie ait été commise.

Il est connu d'utiliser les rayons ultraviolets pour contrôler les éléments de sécurité à encre invisible dans les cartes de crédit, mais ces dispositifs se présentent de façon séparée. Ce qui entraîne une utilisation facultative et ce qui ne permet pas d'atteindre l'objectif ; en plus cette utilisation est peu discrète.

L'objet de l'invention est de fournir un tel détecteur, permettant un contrôle automatique, obtenu par l'intégration du détecteur dans le boîtier mobile de l'imprimante.

Le dispositif de la présente invention peut éviter un certain nombre d'escroqueries par un contrôle rapide grâce à une lumière ultraviolette, qui permet la lecture de l'encre intégrée dans les cartes de crédit, encre qui n'est pas visible à la lumière normale.

La particularité de cette invention est que le dispositif de détection -soit une lampe à rayons ultraviolets de dimensions réduites- est intégré dans la partie mobile de l'imprimante.

Cette poignée ou "tête d'impression" comporte un boîtier qui est pourvu d'un système d'alimentation à piles, rechargeables ou non ; le rechargement s'effectuant par câble rechargeable ou par système solaire.

Le système d'allumage est réalisé par interrupteur situé sur une des parois latérales du boîtier ou par la simple pression de la main sur le boîtier, ce qui permet une utilisation minime des piles ; le dispositif s'allume lors de l'utilisation de l'imprimante et s'éteint après facturation.

Le dispositif de la présente invention peut s'adapter sur des imprimantes déjà en service : un boîtier avec dispositif selon l'invention remplace le boîtier existant en enlevant des vis ou par système d'encastrage.

Une variante du dispositif selon l'invention peut être appliquée sur tous les lecteurs électroniques de cartes de crédit, reliés à une centrale d'ordinateurs.

En effet, si la centrale peut refuser les cartes de crédit déclarées perdues ou volées, seul le dispositif selon l'invention permet la lecture des éléments de sécurité détectables aux rayons ultraviolets.

On peut en outre disposer dans ladite partie mobile, en sus du moyen optique qu'est la lampe à rayons ultraviolets, un moyen magnétique.

De plus, on peut avantageusement disposer un moyen permettant de vérifier le fonctionnement de la lampe à ultraviolets.

A titre d'exemple non limitatif et pour faciliter la compréhension de l'invention, on a représenté aux dessins annexés :

Figure 1, une vue en plan d'un premier mode de réalisation de l'invention ;

Figure 2, une vue de dessous du boîtier mobile de la figure 1 ;

Figure 3, une vue en élévation latérale d'un deuxième mode de réalisation de l'invention ;

Figure 4, une vue en plan du dispositif de la figure 3 ;

Figure 5, une vue de face du dispositif des figures 3 et 4.

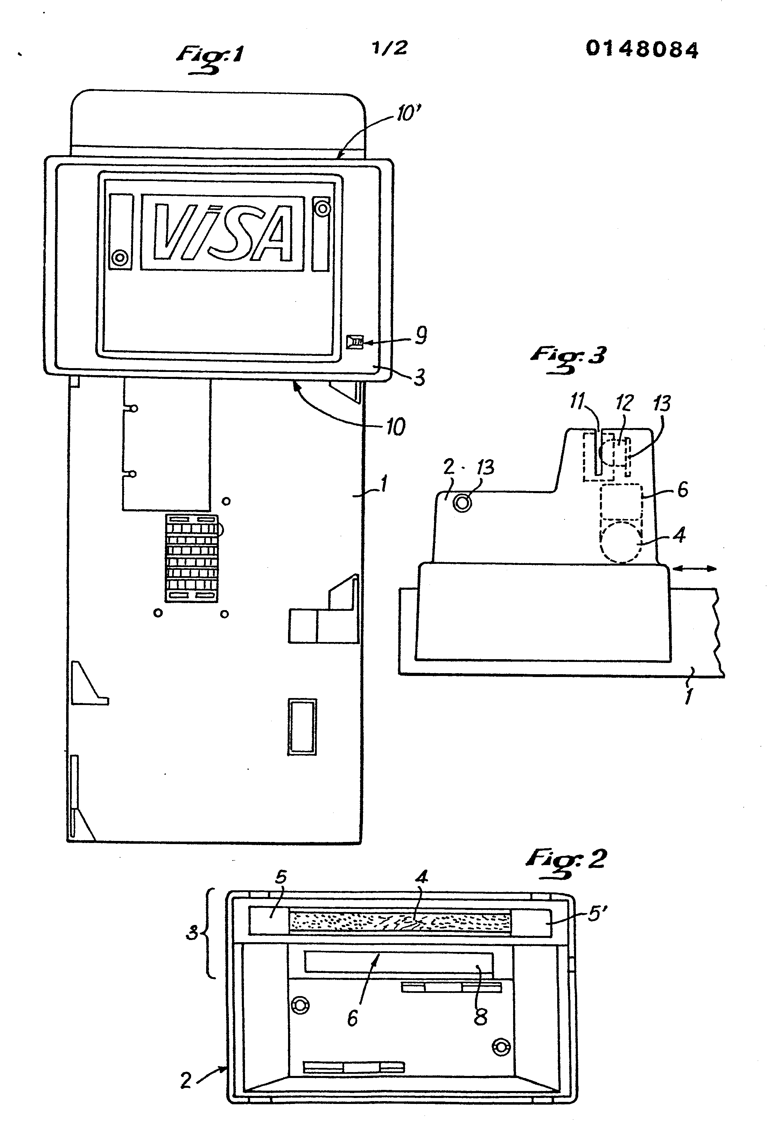

La figure 1 représente l'emplacement du dispositif selon l'invention dans le chariot mobile 2 de l'imprimante ou "fer à repasser".

Le dispositif selon l'invention est disposé dans le compartiment 3 du boîtier 2, dans lequel est logée une alimentation 6 pour l'allumage d'une lampe à rayons ultraviolets 4.

Cette lampe en éclairant la carte de crédit fera ressortir les éléments de sécurité mis dans la carte de crédit et lisibles seulement aux rayons ultraviolets. Elle sera placée préférentiellement sur le côté plutôt qu'en partie médiane, pour faciliter la lecture des éléments de sécurité de la carte.

La lampe 4 à rayons ultraviolets, faisant partie du dispositif selon l'invention, est constituée d'une mini lampe de Wood, sous forme d'un tube, disposée parallèlement audit côté du boîtier et maintenue par des embouts 5 et 5'.

La partie 6 dans laquelle est logée l'alimentation par des piles ou batteries rechargeables, est accessible par un couvercle amovible 8. Une fiche femelle 7 pour le branchement du rechargeur est prévue à la partie latérale inférieure du boîtier.

Des moyens de commande intégrés au boîtier sont prévus, assurant soit un allumage continu ou non par l'intermédiaire d'un interrupteur 9 disposé à la partie supérieure du boîtier, soit un allumage automatique lors de l'utilisation du chariot mobile 2 par l'intermédiaire d'un interrupteur commandé par la pression appliquée par la main latéralement au boîtier dans les zones représentées en 10 et 10' sur la figure 1.

La présente invention permet ainsi à tous les propriétaires d'imprimantes (commerçants, hoteliers, banques, restaurateurs, etc...) une détection immédiate de toutes les fausses cartes de crédit qui n'auront donc pas les éléments de sécurité propres au type de la carte, tels qu'une incription ou traits de couleurs définis, par exemple ; rouge ou bleu.

Un tel dispositif selon l'invention pourra être prévu d'origine ou intégré dans un boîtier s'adaptant en lieu et place du boîtier initial recouvrant la partie mobile.

La figure 3 représente une variante de réalisation. L'appareil comporte, comme cela est connu, un plateau 1 sur lequel on pose d'abord la carte de crédit et par dessus la facture constituée d'un papier spécial. Sur ce plateau 1 circule un boîtier mobile 2 qui comporte un ou plusieurs rouleaux presseurs (non représentés parce que connus), qui appliquent fortement le papier sur les inscriptions en relief de la carte de crédit, ce qui provoque l'inscription des indications de la carte de crédit sur la facture et ses doubles.

Comme décrit précédemment, le boîtier 2 comporte une lampe à rayons ultraviolets 4, en forme de tube, alimentée par une ou plusieurs piles 6.

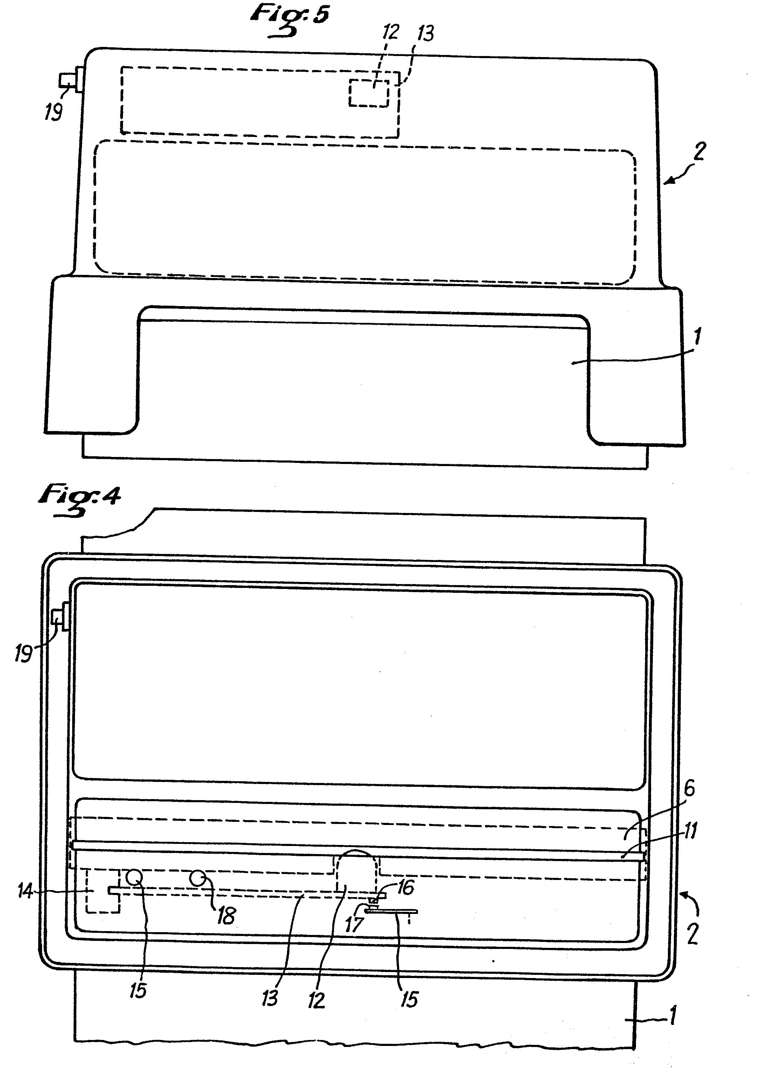

Selon la présente invention, ledit boîtier 2 comporte en plus une fente 11 ouverte à ses deux extrémités et à l'intérieur de laquelle est disposée une tête de lecture électronique 12, qui peut par exemple être une tête de lecture de magnétophone. Cette tête de lecture 12 est montée sur un support élastique qui peut être un ressort ou, comme représenté aux figures 3 à 5, une lame flexible 13 tenue par une extrémité par un support 14 et portant la tête de lecture 12 à son autre extrémité.

Toutes les cartes de crédit comportent une piste magnétique sur laquelle est enregistré un code magnétique qui permet une lecture magnétique de la carte par des machines électroniques qui sont en général reliées à des imprimantes et à un service informatisé de contrôle. Il s'avère que les faussaires qui fabriquent de fausses cartes de crédit n'y incorporent pas d'éléments sensibles aux ultraviolets ni de code magnétique. En passant la carte dans la fente (11), la tête de lecture 12 est appliquée contre la surface de la carte de crédit et détecte si la carte de crédit possède un code magnétique et elle commande l'allumage d'un voyant lumineux 15. La carte ainsi vérifiée une première fois est alors posée sur le plateau 1 et éclairée par la lampe à ultraviolets 4, ce qui permet de détecter si elle a reçu un produit, invisible à la lumière du jour et qui se colore en rouge, jaune, bleu ou autre couleur sous l'action des rayons ultraviolets. Le commerçant qui ne peut pas s'acheter les moyens automatiques de lecture électronique et de vérification des cartes de crédit et possède seulement ce qu'on appelle un "fer à repasser" dispose alors d'un double contrôle lui permettant de déceler la fraude.

De préférence, la lame 13 porte un plot 16 qui, lorsque la lame fléchit au passage de la carte de crédit, vient en contact avec un plot fixe 17, ce qui commande l'allumage d'un voyant lumineux 18, ce qui permet de vérifier que la tête de lecture 12 est bien sous tension et cela avant que la lecture soit commencée. La mise sous tension de la tête de lecture 12 et de la lampe 4 est commandée par tout moyen approprié, par exemple, par un bouton pressoir 19.

De préférence, le bon fonctionnement de la lampe à ultraviolets 4 est contrôlée en déposant sur la surface du plateau 1 en tout endroit voulu et de préférence au début du plateau juste avant l'endroit où l'on place la carte de crédit, une tache d'un produit invisible à l'oeil nu et qui se colore sous l'action des rayons ultraviolets : lorsque la lampe fonctionne, cette tache apparaît de façon brillante et elle n'apparaît pas lorsque la lampe ne fonctionne pas soit parce que l'utilisateur a oublié de l'allumer, soit parce que la lampe est détériorée, soit parce que les piles 4 sont usées.

Dans l'exemple représenté, la fente est transversale à la direction d'avancement du chariot, mais il est bien évident qu'elle peut être disposée longitudinalement ou dans toute autre direction.

Revendications de brevet.

1. Dispositif pour la lecture des éléments de sécurité intégrés dans les cartes de crédit au moyen d'une lampe à rayons ultraviolets, caractérisé en ce que ladite lampe (1) est intégrée dans un boîtier (2) applicable sur la partie mobile des imprimantes destinées à la facturation de l'utilisateur de la carte de crédit, ainsi que les moyens d'alimentation électrique (6) et ce commande (9).

2. Dispositif selon la revendication 1, caractérisé en ce que le boîtier contient un mini-tube à rayons ultraviolets, disposé parallèlement au grand côté du boîtier mobile (2).

3. Dispositif de sécurité pour appareil d'impression de factures au moyen d'un chariot mobile (2) comportant un rouleau presseur, ledit chariot mobile (2) comportant une lampe à ultraviolets (4) alimentée par des piles (6), caractérisé par le fait qu'il comporte en plus une fente (11) dans laquelle fait saillie une tête de lecture électronique (12) permettant de détecter le code magnétique de la carte de crédit.

4. Dispositif selon la revendication 3, dans lequel la tête de lecture (12) est porté par un moyen élastique (13) assurant son contact contre la piste magnétique de la carte de crédit.

5. Dispositif selon la revendication 4, dans lequel le moyen élastique (13) est une lame flexible.

6. Dispositif selon la revendication 4 ou 5, dans lequel le moyen élastique (13) actionne en se déplaçant un contact (17) qui allume un voyant de contrôle (18).

7. Dispositif selon l'une des revendications 3 à 6, dans lequel la tête de lecture (12) actionne un voyant lumineux (15).

8. Dispositif selon l'une quelconque des revendications précédentes, dans lequel le plateau (1) porte à sa surface une tache de produit sensible aux rayons ultraviolets qui s'illumine lorsque la lampe (4) fonctionne.

0148084

*Fig.1*

VISA

*Fig.3*

*Fig.2*

*Fig:5*

*Fig:4*